# EUROPÄISCHE PATENTANMELDUNG

(11) **EP 4 509 302 A1**
(43) Veröffentlichungstag der Anmeldung: **19.02.2025**
(21) Anmeldenummer: 23191635.4
(22) Anmeldetag: 16.08.2023
(51) Int. Cl.: B32B 7/02, B32B 7/12, B32B 15/085, B32B 15/20, B32B 27/08, B32B 27/32

(54) **FOLIE ZUR BILDUNG VON VERPACKUNGS- UND GEHÄUSEELEMENTEN**

(71) Anmelder: Profol GmbH, 83128 Halfing (DE)
(72) Erfinder: STEINHAUER, Udo, 83128 Halfing (DE); GLASEDONNER, Florian, 83128 Halfing (DE)
(74) Vertreter: Hoffmann Eitle

(57) **Zusammenfassung**

Folie zur Bildung von Verpackungs- oder Gehäuseeinheiten umfassend eine Koppelschicht, die ausgelegt ist an eine Metallfolie zu binden; eine Kernschicht mit einer Schichtdicke, welche wenigstens größer als die Hälfte der Foliendicke ist, und eine Siegelschicht, die ausgelegt ist, mit einem Elektrolyten dauerhaft in Kontakt zu stehen.

## Beschreibung

### Technisches Gebiet

Die vorliegende Erfindung betrifft eine Folie zur Bildung von Verpackungs- und Gehäuseelementen. Insbesondere betrifft die vorliegende Erfindung eine Folie, welche zusammen mit einer Diffusionssperre ein zuverlässig abschließendes Verpackungs- bzw. Gehäuseelement für eine elektrolythaltige Substanz oder eine elektrolythaltige Baugruppe bilden kann.

### Technologischer Hintergrund

Elektrolythaltige Substanzen und Baugruppen finden vielseitigen Einsatz in der Elektro-, Automobil und auch in der chemischen Industrie. Elektrolythaltige Substanzen werden zur Weiterverarbeitung verpackt oder bilden auch entsprechende Baugruppen in Form von elektronischen Bauteilen wie bspw. Batterien. Gerade die letztgenannten Batterien sind Gegenstand intensiver Fortentwicklung im Rahmen von elektronischen Konsumgütern, der Elektromobilität oder auch der stationären Speicherung von elektrischer Energie.

Verpackungen und Gehäuse für derartige, elektrolythaltige Substanzen oder Baugruppen müssen gewisse Eigenschaften aufweisen, welche einen sicheren Einschluss der Substanzen und Baugruppen gewährleistet. Eine prominente Rolle spielt dabei insbesondere die Funktion einer Diffusionsbarriere, welche ein Austreten und einen Verlust von elektrolytischen Komponenten wirksam verhindert. Normalerweise werden hierfür Metallfolien verwendet, welche in der Regel eine zufriedenstellende Diffusionsbarriere verwirklichen. Metallfolien lassen sich auch gut in Verpackungs- oder Gehäuseteile formen, da sie entweder eine durch Pressverformung erhaltene Form gut behalten oder sowieso flexibel und umformbar belassen werden. In dieser Art und Weise können also Behälter zur Verpackung, wie bspw. Flaschen oder Beutel, oder eben auch Gehäuse zum dauerhaften Einschluss zuverlässig bereitgestellt werden.

Obwohl Metallfolien in der Regel eine gute Diffusionsbarriere bereitstellen und gut umformbar sind, so weisen sie hinsichtlich der Abdichtung gewisse Nachteile auf. Es ist klar, dass sowohl die in Rede stehenden Verpackungen als auch Gehäuse einen zuverlässigen Einschluss der Substanzen oder Baugruppen gewährleisten müssen. Dadurch stellt sich oft die Aufgabe, Metalloberflächen and den Nahtstellen zuverlässig miteinander zu verbinden und abzudichten, sodass der Einschluss des Elektrolyten sichergestellt ist. Metalle können in der Regel gut verschweißt oder verlötet werden, was jedoch mit einem hohen Wärmeeintrag und Energieverbrauch einhergeht.

Daher besteht Bedarf an einer zuverlässigen Verbindung von Diffusionsbarrieren zur Herstellung von Verpackungs- oder Gehäuseelementen, welche ein Elektrolyt, eine elektrolythaltige Substanz oder eine entsprechende Baugruppe zuverlässig einschließen. Insbesondere ist es demnach Aufgabe, der vorliegenden Erfindung, eine Folie zur Bildung von Verpackungs- oder Gehäuseeinheiten bereitzustellen, welche einen zuverlässigen Einschluss von Elektrolyten gewährleistet, sowie hinsichtlich Verarbeitung, Gewicht und Energieeinsatz insgesamt eine positive Vorteilsbilanz erzielt.

### Zusammenfassung der Erfindung

Die genannten und weitere Vorteile werden durch die Folie gemäß Patentanspruch 1 bereitgestellt. Weitere vorteilhafte Ausgestaltungen der vorliegenden Erfindung sind in den abhängigen Patentansprüchen angegeben.

Gemäß einem Aspekt der vorliegenden Erfindung wird eine Folie bereitgestellt zur Bildung von Verpackungs- oder Gehäuseeinheiten umfassend eine Koppelschicht, die ausgelegt ist, an eine Metallfolie zu binden; eine Kernschicht mit einer Schichtdicke, welche wenigstens größer als die Hälfte der Foliendicke ist, und eine Siegelschicht, die ausgelegt ist, mit einem Elektrolyten dauerhaft in Kontakt zu stehen.

### Kurze Zusammenfassung der Zeichnungen

Ausführungsformen der vorliegenden Erfindungen werden nun anhand der folgenden Figuren näher beschrieben. Die entsprechende Darstellung dient dabei lediglich des besseren Verständnisses der erfindungsgemäßen Lehre und der damit im Zusammenhang stehenden Vorteile, soll aber an keiner Stelle einschränkend verstanden werden. Es zeigen:
- Figur 1: schematisch den prinzipiellen Aufbau einer Folie gemäß einer Ausführungsform der vorliegenden Erfindung;
- Figur 2: schematisch den prinzipiellen Aufbau eines Verpackungs- bzw. Gehäuse-Vorprodukts mit einer Folie gemäß einer Ausführungsform der vorliegenden Erfindung;
- Figuren 3A bis 3E: schematisch mögliche Formen von Verpackungs- oder Gehäuseelementen aus einer Folie gemäß einer Ausführungsform der vorliegenden Erfindung; und
- Figuren 4A & 4B: schematisch mögliche Anwendungen einer Folie gemäß einer Ausführungsform der vorliegenden Erfindung.

### Detaillierte Beschreibung

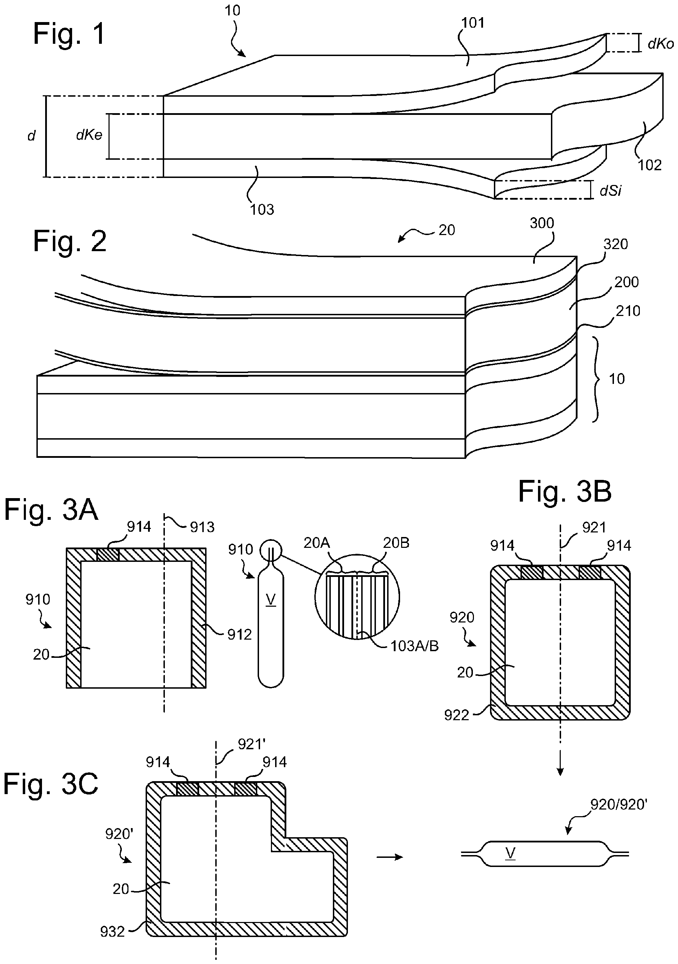

Figur 1 zeigt schematisch den prinzipiellen Aufbau einer Folie gemäß einer Ausführungsform der vorliegenden Erfindung. Eine Folie 10 dient zur Bildung von Verpackungs- oder Gehäuseeinheiten, insbesondere zum Einschluss eines Elektrolyten, einer elektrolythaltigen Substanz oder einer elektrolythaltigen Baugruppe. Diese Anwendungen sowie auch die Formen der entsprechenden Verpackungen und Gehäuse werden im Zusammenhang weiterer Ausführungsformen näher beschrieben. Die Folie 10 kann dabei vorzugsweise Produkt einer Koextrusion sein, bei welcher die Materialien der einzelnen Schichten in einem aufgeschmolzenen Zustand zusammengeführt werden, um an der Extrusionsdüse bzw. Auslass als Folie 10 zu verfestigen. In dieser Weise können die jeweiligen Schichteigenschaften und Schichtstärken (Dicke) durch entsprechende Vorprodukte und deren Mengenraten bereitgestellt werden. Insgesamt kann die Folie 10 als eine Cast-Folie, insbesondere eine Cast-Polypropylen (CPP) Folie bereitgestellt werden, insofern Polypropylen oder andere polyolefinbasierte Kunststoffe zum Einsatz kommen.

Die Folie 10 weist dabei eine Koppelschicht 101 auf, die ausgelegt ist, an eine Metallfolie zu binden. Optional kann für die Bindung der Koppelschicht 101 ein Haftvermittler Einsatz finden, sodass die Eigenschaften der Koppelschicht 101 entweder auf eine direkte Bindung an eine Metallfolie oder auf eine Bindung an die Metallfolie über einen Haftvermittler abgestimmt sind. Ein solcher Haftvermittler kann über die Zugabe eines Haftvermittleradditivs, z. B. während des Extrudierens, in die Koppelschicht bereitgestellt werden. Des Weiteren kann ein Haftvermittler auch über ein (separates) Klebersystem oder einen Klebstoff (Kleber) bereitgestellt werden. Im letzteren Fall kann der Haftvermittler, bspw. in Form eines Klebersystems, die Eigenschaften der Koppelschicht indirekt über die Metallfolie zumindest mitbestimmen. Diese Koppelschicht 101 kann an sich aus einem polyolefinbasierten Kunststoff wie bspw. Polypropylen bestehen oder dieses zumindest aufweisen. Die Koppelschicht 101 kann Corona vorbehandelt sein, um in einem späteren Herstellungsschritt gut an eine Metallfolie oder Metallschicht, ggf. mittels einem Haftvermittler (z. B. Klebersystem an Aluminium), zu binden. (bspw. mit einem).

Vorzugsweise kann die Koppelschicht 101 eine Corona Vorbehandlung aufweisen. Mit einer derartigen Corona-Vorbehandlung kann die Oberflächenspannung der Koppelschicht gegenüber einer Schicht ohne entsprechende Vorbehandlung erhöht werden. Beispielsweise kann die Oberflächenspannung auf Werte >30 mN/m (Dyn), vorzugsweise >38 mN/m (Dyn), erhöht werden. Die Oberflächenspannung kann dabei durch einen Dyn-Testtinten-Stift oder durch Kontaktwinkelmessung gemessen werden, ist also Merkmal der entsprechenden Ausführungsformen. Die Corona-Vorbehandlung kann in vorteilhafter Weise die Anbindung der Koppelschicht an die Metallfolie verbessern, insbesondere beim Einsatz der optionalen Haftvermittler oder Kleber. Ansonsten kann die Koppelschicht 101 durch thermisches Laminieren direkt an die Metallfolie binden. Die Koppelschicht 101 kann eine Schichtdicke in einem Bereich von 4 µm bis 20 µm, oder vorzugsweise in einem Bereich von 5% bis 20% der Dicke der Folie 10 aufweisen.

Die Folie 10 weist des Weiteren eine Kernschicht 102 auf, welche insbesondere zur Erzielung der gewünschten Elastizität, Zähigkeit und/oder Durchführungsfestigkeit des Gesamtaufbaus der Folie 10 und/oder des Verpackungs- oder Gehäuseelementes beiträgt. Unter anderem aus diesem Grund weist die Kernschicht 102 eine Schichtdicke dKE auf, welche wenigstens größer als die Hälfte der Foliendicke d ist, vorzugsweise sogar im Wesentlichen gleich oder größer als 70% der Foliendicke d ist. Die Kernschicht 102 kann eine Schichtdicke in einem Bereich von 20 µm bis 200 µm aufweisen.

Die Folie 10 weist des Weiteren eine Siegelschicht 103 auf, die ausgelegt ist, mit einem Elektrolyten dauerhaft in Kontakt zu stehen. Die Siegelschicht kann ferner gut mit einer weiteren Siegelschicht, so auch bspw. einem Bereich derselben Siegelschicht derselben Folie an anderer Stelle versiegeln, um so eine zuverlässige Abdichtung bereitzustellen. Das Siegeln kann dabei durch eine wärmeinduzierte Thermo-Schweißung oder eine Ultraschall-Schweißung erfolgen. Die Siegelschicht zeichnet sich durch eine Bildung einer Siegelnaht mit hoher Festigkeit aus. Des Weiteren zeichnet sich die Siegelschicht dadurch aus, dass sie einen frühen Siegelpunkt aufweist, d.h. bereits bei relativ niedrigen Temperaturen, vorzugsweise bei Temperaturen ab 100 °C siegelt. Hierfür können spezielle PP-Polymertypen zum Einsatz kommen, die in der Herstellung so modifiziert wurden, dass ein Siegelpunkt unter dem für ein normales, unmodifiziertes PP erreicht wird und so eine hochbelastbare Siegelnaht bereitgestellt werden kann. Die Siegelschicht kann sich ferner dadurch auszeichnen, dass das Siegeln auch bei Benetzung der Siegelfläche mit Elektrolyten ohne signifikante Änderung der Siegelfähigkeit funktioniert.

Beispiele für derartige Elektrolyte umfassen Lithiumphosphate, wie bspw. Lithiumhexafluorophosphat, welche in Ethylencarbonat, Dimethylcarbonat und/oder Diethylcarbonat gelöst sind. Eine für die Beständigkeit gegenüber einem dauerhaften Kontakt mit einem Elektrolyten vorteilhafte Eigenschaft können die chemische Beständigkeit und das Migrationsverhalten der Elektrolytlösung durch die Folie 101 sein. Andernfalls kann eine Migration Elektrolytlösung durch die Folie die Haftung der Metallfolie angreifen bzw. zersetzen. Dadurch kann es zur Delaminierung kommen, was die Ausführungsformen der vorliegenden Erfindung jedoch wirksam verhindern. Eine gewünschte Beständigkeit kanns bspw. durch den Einsatz von der Cast-Polypropylen, Cast-PP, erzielt werden. Die Siegelschicht 103 kann eine Schichtdicke in einem Bereich von 2 µm bis 20 µm, oder vorzugsweise in einem Bereich von 5% bis 20% der Dicke der Folie 10.

Aus den oben bereits genannten Schichtdicken ergibt sich dann je nach Anwendung eine gesamte Schichtdicke d der Folie 10. So kann bspw. für eine Anwendung in mobilen Endgeräten die Dicke der Folie insgesamt 30 bis 50 µm oder bspw. 40 µm betragen. Für die Hochvolt-Batterien der Automobilindustrie kann die Foliendicke in einem Bereich von 70pm bis 90pm, vorzugsweise etwa 80 µm betragen. Für den Fall, dass Aluminium als Metall gewählt wird, kann die Folie 10 dann als Aluminium Laminierfolie, kurz ALF, bezeichnet werden, welche vorzugsweise als eine dreischichtige Koextrusions-Folie aus CPP zur Kaschierung bereitgestellt wird.

Figur 2 zeigt schematisch den prinzipiellen Aufbau eines Verpackungs- bzw. Gehäuse-Vorprodukts mit einer Folie gemäß einer Ausführungsform der vorliegenden Erfindung. Gezeigt ist insbesondere ein ebenfalls folienartiges oder plattenartiges Halbzeug 20, welche eine Folie 10 zur Bildung von Verpackungs- oder Gehäuseeinheiten umfasst, wie diese an anderer Stelle der vorliegenden Offenbarung beschrieben wurde. Das Halbzeug umfasst ferner eine Metallschicht 200 in Form einer Metallfolie, einer Metallplatte oder eines Blechs. Vorteilhafterweise, ist die Metallschicht eine Aluminiumfolie mit einer Materialstärke im Bereich von 10 bis 100 µm oder 30 bis 50 µm.

Das Halbzeug 20 ist an die Folie 10 mit einem Kleber 210, vorzugsweise einem Laminatkleber, einem Zwei-Komponenten-Kleber, oder einem Polyurethan-, PU-, Kleber verbunden. In einer vorteilhaften Ausführungsform ist die Folie 10 zunächst Coronavorbehandelt, was die Bindung an die Metallschicht 200 über den Kleber 210 verbessert. Auf der Metallschicht 200 ist des Weiteren eine äußere Schutzschicht 300 angeordnet, welche bspw. aus Polyamid (PA) und/oder Polyethylenterephthalat (PET) besteht oder dieses zumindest enthält. Die Schutzschicht 300 kann mit einem weiteren Kleber 320 an die Metallschicht 200 gebunden werden. Die Schutzschicht 300 kann eine Materialstärke im Bereich von 10 bis 30 µm oder 15 bis 20 µm aufweisen. Eine übliche Schichtdicke für den Gesamtverbund 20 kann sich dann bspw. zu ca. 140 µm ergeben. Im Falle von Aluminium als Metallschicht kann diese dann auf einer Seite mit einer vorgenannten Koextrusions-Folie und einer Polyamid-Folie in einem mindestens 3-Lagenverbund mittels Klebersystemen kaschiert werden (bspw. ko-extrudiertes PP - Aluminium - PA - PET).

Figuren 3A bis 3E schematisch mögliche Formen von Verpackungs- oder Gehäuseelementen aus einer Folie gemäß einer Ausführungsform der vorliegenden Erfindung. In Fig. 3A ist eine einfache Taschenform 910 gezeigt, für welche ein Halbzeug 20 in einer rechteckigen Form entlang eines Falz 911 umgelegt wurde und an den übrigen Seiten in Bereichen 912 verschweißt wurde. In vorteilhafter Weise treffen an diesen Stellen jeweils die Siegelschichten 103 des Halbzeugs 20 aufeinander, welche durch ein Verschweißen einen zuverlässigen Einschluss des Volumens V bereitstellen (hier im Inset verschmelzen die Siegelschichten 103 der Halbzeige 20A und 20B in einem Bereich 103A/B). In die verschweißten Bereiche 912 können ein oder mehrere Zugänge 914 eingearbeitet sein, welche einen Zugang zum inneren Volumen V bereitstellen und so bspw. eine elektrische Kontaktierung im Falle eines Batteriegehäuses oder einen Verschluss im Falle einer Verpackung bereitstellen. Im rechten Bereich ist eine Schnittansicht der Taschenform 910 mit dem Volumen V entlang der Achse 913 gezeigt.

In Figuren 3B & 3C sind weitere Taschenformen gezeigt, welche im Wesentlichen eine rechteckige Grundform wie im Fall der Tasche 920 (Fig. 3B) oder aber auch jede beliebige Form wie im Fall der Tasche 920' (Fig. 3C) aufweisen können. Durch eine erfindungsgemäße Folie und ein entsprechendes Halbzeug können so Taschen in fast beliebiger Form erhalten werden, indem der entsprechend Kantenbereich 922, 932 verschweißt wird, wobei wieder die jeweiligen Siegelschichten aufeinander liegen und verschweißt werden können. Auch in diesen Formen können wieder eine oder mehrere Zugänge 914 vorgesehen sein, deren jeweilige Position in vorteilhafter Weise an der für die Anwendung günstigste Stelle gesetzt werden kann, da der Taschenaufbau mit deiner erfindungsgemäßen Folie bzw. Halbzeug hier große Flexibilität schafft. Schematisch ergibt sich in beiden Fällen die Querschnittsansicht 920/920' mit dem darin befindlichen Volumen V.

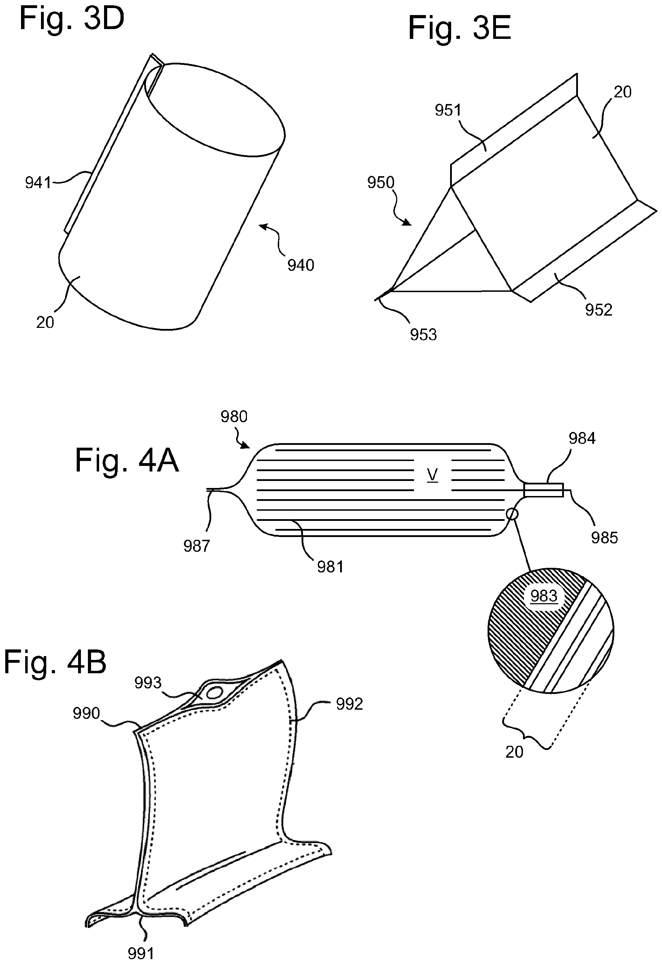

In Figur 3D ist eine zylindrische Form 940 gezeigt, welche sich durch eine einfache Wicklung eines Halbzeugs 20 ergibt. So lassen sich auch Taschen in zylindrischer oder Becherform über wenigstens einen verschweißten Bereich 941 erzeugen. In Figur 3E ist eine Tasche 950 in prismatischer Form gezeigt, welche sich durch eine Kombination eines oder mehrerer Falze und eines oder mehrerer verschweißter Bereiche 951 (und ggf. 952, 953) ergibt.

Figur 4A zeigt schematisch eine mögliche Anwendung einer Folie gemäß einer Ausführungsform der vorliegenden Erfindung. In dieser Anwendung ist eine Batterie 980 vorgesehen, welche bspw. eine aufladbare Batterie, eine Lithium-Ionen-Batterie, eine Lithium-Polymer Batterie, eine Festkörper-Batterie oder dergl. ist. Eine elektrolythaltige Baugruppe umfasst dabei eine Elektrodenstruktur 981 und ein Elektrolyt 983, wobei die innere Siegelschicht 103 des Halbzeugs 20 im Kontakt mit dem Elektrolyt 983 ist (s. Inset). In taschenartigen Batterien, sog. "Pouchzellen", werden üblicherweise mehrere rechteckige Lagen von negativen und positiven Elektroden und Ableitfolien mit entsprechenden Lagen von Separatoren wie in einem Sandwich gestapelt. Die Elektroden werden meist zu einer Seite abgeführt. Die äußere Ummantelung und Abdichtung erfolgt durch tiefgezogenen verschweißte Kunststoff-Aluminium-Kunststoff Mehrlagenfolien.

Das Gehäuse umfasst dabei eine Tasche aus einer erfindungsgemäßen Folie 10 bzw. Halbzeug 20, welche durch Verschweißen wenigstens eines Bereiches 987 erhalten wird. Hinsichtlich der Form des Batteriegehäuses kann so größtmögliche Flexibilität erhalten werden und so in vorteilhafter Weise eine entsprechende Batterie, bspw. eine sog. Taschen- oder Beutelzelle (bzw. "Pouch-Zelle", engl.: "pouch cell" bereitgestellt werden. In einem der verschweißten Bereiche 987 kann ein Zugang in Form einer Kontaktierung 984 vorgesehen sein, welche elektrisch isoliert einen Batteriekontakt 985 aus dem inneren Volumen V und von der Baugruppe herausführt.

Für derartige Anwendungen kann das Halbzeug, bspw. ein Pouch-Batterie-Folienaufbau "CPP-Film - Aluminiumfolie - PA-Folie" mittels Stamping oder Pressformen in eine (meist) rechteckige Kavitätenform gebracht, wobei zwei dieser Formen mittels Thermo- oder Ultraschall-- Schweißung aufeinander gesiegelt, das Gehäuse für die Batterie-Baugruppe (Coil und Elektrolyt) bilden. Nach der Versiegelung (Schweißen) verbleibt die Siegelschicht permanent und zuverlässig auf der durch das Klebersystem laminierten Aluminiumfolie. Selbst im Falle einer Beschädigung oder zum Ende der Lebensdauer soll bei De-Laminierung bzw. dem Aufreißen/Trennen der Siegelnaht eine Restfolie auf der Metallschicht, z. B. der Aluminiumfolie, verbleiben. An dieser Stelle sei erwähnt, dass "dauerhaft" im Zusammenhang der vorliegenden Offenbarung allgemein wenigstens die Dauer einer geplanten Lebensdauer oder Einsatzzeit des entsprechenden Produkts bezeichnet. (Verpackung, Gehäuse, Batterie, etc.) Dabei bieten die Ausführungsformen der vorliegenden Erfindung auch noch im schlimmsten Fall ("worst case scenario") einer Delaminierung, immer noch den wesentlichen Vorteil, dass eine Restschicht, bspw. aus PP, auf der Metallfolie im Sinne einer dünnen Schutzschicht verbleibt.

Dies wird insbesondere durch den Verbundaufbau des Halbzeugs erzielt, indem im höchsten Belastungsfall der Verbund innerhalb der Folie aufbricht, d.h. die Koppelschicht löst sich von der Kernschicht und/oder die Kernschicht löst sich von der (verschweißten) Siegelschicht und die Metallfolie bleibt durch den Folienrest vor dem Kontakt mit Elektrolyt geschützt. In jedem Fall verbleibt also eine Restschicht der Folie auf dem bspw. Aluminium und es kann in vorteilhafter Weise vermieden werden, dass die Elektrolytlösung in Kontakt mit der Aluminiumfolie kommen kann. Das Delaminieren kann im Übrigen durch die sog. Weißbruchanzeige demonstriert werden, bei welcher bspw. eine PP-Schicht auf der Aluminiumfolie verbleibt.

Figur 4B zeigt schematisch eine mögliche Anwendung einer Folie gemäß einer Ausführungsform der vorliegenden Erfindung. In dieser Anwendung ist eine Verpackung 990 in der beispielhaften Form eines Standbeutels vorgesehen. Hierfür wird ein Halbzeug vermittels einer Kombination eines oder mehrerer Falz(e) 991 und eines oder mehrere verschweißter Bereiche 992 ergibt. In einem der verschweißten Bereiche kann ein Zugang in Form eines Verschlusses 993 vorgesehen sein, welche eine Befüllung und oder eine Entleerung der Verpackung ermöglicht. Durch den Einsatz einer erfindungsgemäßen Folie 10 bzw. Halbzeug 20 kann eine zuverlässige Produktverpackung erhalten werden, welche auch elektrolythaltige Substanzen zuverlässig einschließt.

## Patentansprüche

1. Folie zur Bildung von Verpackungs- oder Gehäuseeinheiten umfassend:
- eine Koppelschicht, die ausgelegt ist an eine Metallfolie zu binden;
- eine Kernschicht mit einer Schichtdicke, welche wenigstens größer als die Hälfte der Foliendicke ist, und
- eine Siegelschicht, die ausgelegt ist, mit einem Elektrolyten dauerhaft in Kontakt zu stehen.

2. Folie nach Anspruch 1, wobei die Koppelschicht ausgelegt ist an eine Metallfolie zu binden, indem sie eine Corona-Vorbehandlung aufweist, welche die Bindung an die Metallfolie über einen Haftvermittler begünstigt.

3. Folie nach Anspruch 2, wobei der Haftvermittler einen Klebstoff oder ein Klebersystem aufweist.

4. Folie nach Anspruch 1, wobei die Koppelschicht ausgelegt ist an eine Metallfolie zu binden, indem sie ein Haftvermittleradditiv aufweist, welche die Bindung an die Metallfolie begünstigt.

5. Folie nach Anspruch 4, wobei die Koppelschicht vermittels des Haftvermittleradditivs direkt an die Metallfolie bindet.

6. Folie nach einem der Ansprüche 1 bis 5, wobei die Siegelschicht auch bei vorheriger Benetzung durch einen Elektrolyten eine Schweiß- oder Siegelverbindung eingeht.

7. Folie nach einem der Ansprüche 1 bis 6, wobei Koppelschicht, Kernschicht und Siegelschicht in einem koextrudierten Aufbau vorliegen.

8. Folie nach einem der Ansprüche 1 bis 7, wobei die Koppelschicht, die Kernschicht und/oder die Siegelschicht einen polyolefinbasierten Kunststoff aufweist/aufweisen.

9. Folie nach Anspruch 8, wobei der polyolefinbasierte Kunststoff ein Cast-Polypropylen, Cast-PP, ist.

10. Halbzeug zur Bildung von Verpackungs- oder Gehäuseeinheiten aufweisend eine Folie nach einem der Ansprüche 1 bis 9 und eine and die Koppelschicht gebundene Metallfolie.

11. Halbzeug nach Anspruch 10, wobei die Metallfolie eine Aluminiumfolie ist.
